# EUROPÄISCHE PATENTSCHRIFT

(11) **EP 1 319 946 B1**
(45) Veröffentlichungstag und Bekanntmachung des Hinweises auf die Patenterteilung: **28.09.2005**
(21) Anmeldenummer: 02027448.6
(22) Anmeldetag: 10.12.2002
(51) Int. Cl.: G01N 27/90

(54) **Vorrichtung und Verfahren zur Wirbelstromprüfung eines Prüflings mit einer planaren Oberfläche**
Apparatus and method for eddy current testing of a specimen under test with a planar surface
Procédé et dispositif pour essais par courant de foucault d'un dispositif à tester avec une surface planaire

(30) Priorität: 17.12.2001 DE 10161973
(43) Veröffentlichungstag der Anmeldung: 18.06.2003
(73) Patentinhaber: Prüftechnik Dieter Busch AG, 85737 Ismaning (DE)
(72) Erfinder: Knöll, Thomas Dr., 89231 Neu-Ulm (DE)

(56) Entgegenhaltungen:
- US-A- 3 611 120
- US-A- 4 445 089
- US-A- 5 043 663
- US-A- 5 130 652

## Beschreibung

Die vorliegende Erfindung betrifft eine Vorrichtung und ein Verfahren zur Wirbelstromprüfung eines linear vorgeschobenen Prüflings mit einer planaren Oberfläche.

Aus der US 5,130,652 ist eine Wirbelstromprüfvorrichtung bekannt, bei welcher in dem Luftspalt zwischen zwei Magnetpolen einer Anregungsspule eine rotierende Sensorspule angeordnet ist, welche mittels eines Antriebs und einer Trägeranordnung auf einer Kreisbahn bewegt wird, die parallel zur Oberfläche des Prüflings liegt. Die Drehachse der Sensorspule ist bezüglich der Anregungsspule feststehend. Der Prüfling wird bei der Messung linear bezüglich der Anregungsspule verschoben, während die Sensorspule auf der Kreisbahn bewegt wird, wobei das Signal der Sensorspule dauernd ausgewertet wird. Die Kreisbahn ist so bemessen, daß sie kleiner als die Abmessung des Prüflings quer zu der Vorschubrichtung ist.

Eine ähnliche Vorrichtung ist aus der US 4,594,549 bekannt, wobei ein Sensorspulenpaar ebenfalls rotierend in dem Luftspalt einer Anregungsspule angeordnet ist.

Aus der US 4,761,610 ist eine Wirbelstrommeßvorrichtung bekannt, bei welcher eine auf einer Kreisbahn rotierende Sensorspule quer zu der Vorschubrichtung des Prüflings von einem seitlichen Rand zum anderen des Prüflings hin- und herbewegt wird, um die Prüflingsoberfläche abzurastern.

Aus der US 6,014,024 ist eine Wirbelstrommeßvorrichtung bekannt, bei welcher ebenfalls eine auf einer Kreisbahn rotierende Sensorspule vorgesehen ist.

Aus der US 5,491,409 und der US 5,864,229 ist es bekannt, eine Mehrzahl von Sensorspulen hintereinander entlang der Längsachse einer Anregungsspule anzuordnen, wobei die einzelnen Sensorspulen sukzessive aktiviert werden, um ein lineares Abrastem des Prüflings zu ermöglichen, ohne die Spulen bezüglich des Prüflings zu bewegen.

Eine Wirbelstrommeßvorrichtung gemäß dem Oberbegriff des Anspruchs 1 ist auch aus US3611120 bekannt.

Die genannten Wirbelstromprüfvorrichtungen sind nicht dafür ausgelegt, im Bereich der Kanten des Prüflings zu messen. Wenn ein Wirbelstromsensor von außerhalb des Prüflings in dem Bereich oberhalb der Prüflingsoberfläche bewegt wird, kann aufgrund des großen Permeabilitätssprungs an der Kante des Prüflings in diesem Bereich keine Messung vorgenommen werden, wodurch sich eine gewisse systembedingte Totzeit ergibt, während welcher keine sinnvoll interpretierbaren Meßdaten gewonnen werden können. Bei einem sich sehr schnell bewegenden Wirbelstromsensor kann dies bei schmalen Prüflingen dazu führen, daß ein erheblicher Teil der Prüflingsfläche in den Bereich dieser Totzeit fällt und somit nicht vermessen werden kann.

Es ist Aufgabe der vorliegenden Erfindung, eine Vorrichtung und ein Verfahren zur Wirbelstromprüfung zu schaffen, welche bzw. welches für schmale, langgestreckte Prüflinge auch bei hoher Vorschubgeschwindigkeit einsetzbar ist, wobei für einen möglichst großen Teil der Prüflingsfläche interpretierbare Meßdaten gewonnen werden sollen.

Diese Aufgabe wird erfindungsgemäß gelöst durch eine Vorrichtung gemäß Anspruch 1 sowie ein Verfahren gemäß Anspruch 14.

Bei der erfindungsgemäßen Lösung ist vorteilhaft, daß ein relativ schmaler Prüfling auch bei relativ hoher Vorschubgeschwindigkeit im wesentlichen über seine gesamte Oberfläche untersucht werden kann.

Bevorzugte Ausgestaltungen der Erfindung ergeben sich aus den Unteransprüchen.

Im folgenden wird die Erfindung anhand der beigefügten Zeichnungen beispielhaft näher erläutert. Dabei zeigen:
Fig. 1 schematisch eine erste Ausführungsform des Sensorteils einer erfindungsgemäßen Wirbelstromprüfvorrichtung;
Fig.2 in ähnlicher Weise eine zweite Ausführungsform;
Fig. 3 in ähnlicher Weise eine dritte Ausführungsform;
Fig.4 in ähnlicher Weise eine vierte Ausführungsform;
Fig. 5 eine erweiterte schematische Ansicht der Ausführungsform gemäß Fig. 1; und
Fign. 6 bis 9 in schematischer Weise unterschiedliche Betriebszustände der Vorrichtung von Fig. 5.

Bei der Prüfung eines elektrisch leitenden Werkstücks mittels Wirbelströmen wird die Tatsache ausgenutzt, daß Materialfehler in dem Werkstück bzw. Prüfling (beispielsweise Risse, Lunker, Oberflächenschäden, schlechte Schweißnähte usw.) die Ausbreitung von Wirbelströmen, welche mittels der Erregerspule induziert werden, behindern, was sich auf das wiederum von den Wirbelströmen erzeugte elektromagnetische Feld auswirkt. Das von den Wirbelströmen erzeugte elektromagnetische Feld wird dabei mittels eines Sensors erfaßt, bei dem es sich um die Erregerspule selbst oder mindestens eine separate Meßspule handeln kann. Falls nur eine einzige separate Meßspule vorgesehen ist, wird diese Anordnung "Absolutspule" genannt. Zwei oder mehr Meßspulen können subtraktiv geschaltet werden, was als "Differenzspule" bezeichnet wird und das Ausschalten beispielsweise einer Temperaturdrift ermöglicht. Ein die Wirbelströme beinflussender Materialfehler kann somit als Impedanzänderung der mit dem Prüfling gekoppelten Meßspule aufgefasst werden, wobei das Fehlersignal üblicherweise als Vektorgröße (Amplitude und Phasenwinkel) in der Impedanzebene der Meßspule dargestellt wird. Die Phasenverschiebung der Wirbelströme bezüglich der Erregerspannung hängt u.a. von der Tiefe im Material ab. Die Erregerfrequenz bestimmt die Eindringtiefe sowie die Phasenverschiebung der Wirbelströme in einer bestimmten Materialtiefe.

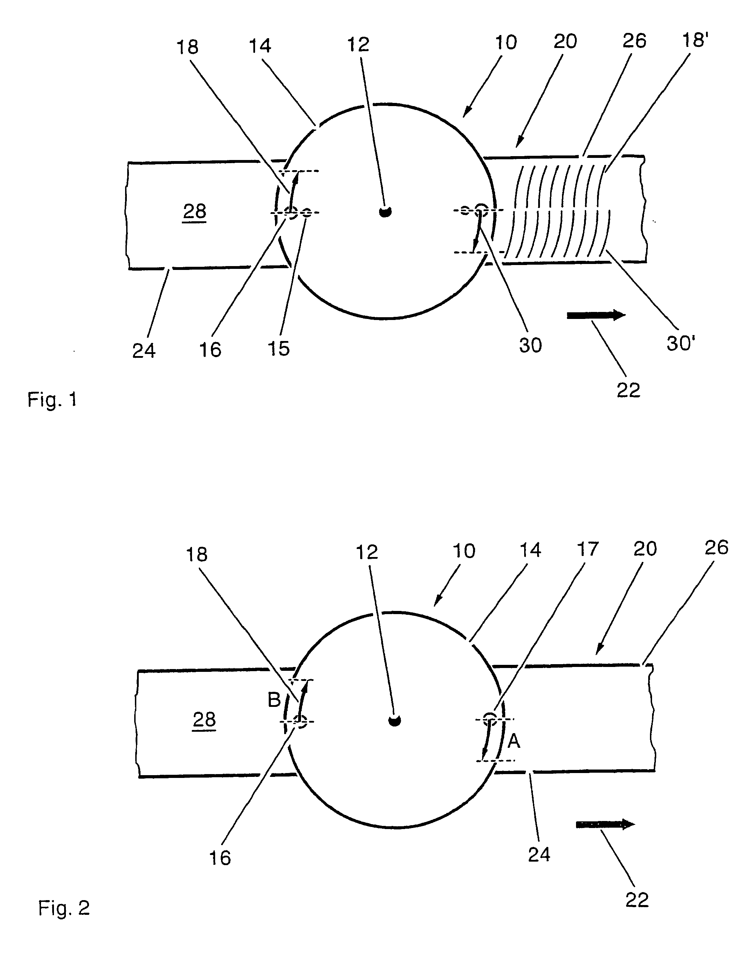

In Fig. 1 ist schematisch der Sensorbereich einer ersten Ausführungsform der Erfindung dargestellt. Dabei handelt es sich um eine sogenannte Flachrotiersonde 10, welche eine um eine ortsfeste Achse 12 rotierende Trägerscheibe 14 und eine Wirbelstromsonde 16 umfaßt, welche im Umfangsrandbereich der Trägerscheibe 14 fest an dieser montiert ist. Die Drehrichtung der Scheibe 14 und damit der Sonde 16 ist mit Pfeilen 18 und 30 angedeutet. Unterhalb der Trägerscheibe 14 ist ein elektrisch leitender Prüfling 20 mit flacher und vergleichsweise schmaler Oberfläche angeordnet, der in Richtung des Pfeils 22 linear mit im wesentlicher konstanter Geschwindigkeit (beispielsweise 40 bis 60 m/min) vorwärts bewegt wird. Bei dem Prüfling 20 kann es sich beispielsweise um einen in einem Stahlwerk erzeugten Knüppel handeln, dessen Flachseiten jeweils einer Wirbelstromprüfung mittels der Flachrotiersonde 10 unterzogen werden. Die Abmessung des Prüflings 20 quer zu der Vorschubrichtung 22 ist deutlich kleiner als der Durchmesser der Trägerscheibe 14 bzw. der Kreisbahn der Sonde 16, der typischerweise 250 mm beträgt, und beträgt typischerweise 60 bis 140 mm. Der Kreisbahndurchmesser der Sonde 16 sollte so gewählt sein, daß auch im Randbereich des Prüflings 20 der Winkel zwischen Sondenbahn und Längsachse des Prüflings 20 nicht zu groß wird, so daß noch eine hinreichende Empfindlichkeit der Sonde für in Längsachse des Prüflings 20 orientierte Fehler erzielt wird. Mit zunehmendem Winkel zwischen Sonde und Längsfehler nimmt die Sondenempfindlichkeit ab.

Eine typische Drehgeschwindigkeit der Trägerscheibe 14 beträgt 3000 Umdrehungen/min. Die Drehgeschwindigkeit sollte in Relation zu der Vorschubgeschwindigkeit hoch genug sein, um in Längsrichtung des Prüflings 20 eine hinreichend dichte Abtastung zu gewährleisten.

Bei der Sonde 16 kann es sich beispielsweise um eine Absolutspule oder eine Differenzspule handeln. Die Erregerspule ist in Fig. 1 nicht dargestellt. Grundsätzlich kann jedoch auch die Erregerspule selbst als Meßspule dienen.

Vorzugsweise ist in der Nähe der Wirbelstromsonde 16 zusätzlich eine Abstandssonde 15 vorgesehen, mittels welcher der Abstand zwischen der Sonde 16 und der Oberfläche des Prüflings 20 überwacht wird, um das von der Sonde 16 gelieferte Wirbelstromstromsignal bezüglich Abstandsschwankungen zu korrigieren bzw. durch eine entsprechende Abstandsregelung solche Abstandsschwankungen grundsätzlich zu verhindern.

Wenn die Sonde 16 von außerhalb des Prüflings 20 über die seitliche Kante 24 oder 26 in den Bereich der zu vermessenden Prüflingsfläche 28 bewegt wird, tritt durch die starke Veränderung der Permeabilität an der Metallkante 24, 26 der Fall ein, daß nach Überstreichen der Kante 24,26 für die Dauer einer systembedingten Totzeit keine sinnvoll nutzbaren Wirbelstromsignale von der Sonde 16 geliefert werden. Je nach Relativgeschwindigkeit der Sonde 16 bezüglich der Querrichtung des Prüflings 20, d.h. je nach Drehzahl der Trägerscheibe 14, tritt dadurch das Problem auf, daß ein mehr oder weniger großer Teil im Bereich einer der beiden Kanten 24, 26 nicht vermessen bzw. überprüft werden kann. Bei den für Flachrotiersonden typischen Drehzahlen kann dieser Bereich mehrere 10 % der zu vermessenden Prüflingsfläche 28 ausmachen.

Um eine möglichst vollständige Überprüfung der Prüflingsfläche 28 zu erreichen und dennoch eine zuverlässige Ausblendung von Störsignalen zu gewährleisten, wird die Meßdatenerfassung mittels der Sonde 16 von einer in Fig.1 nicht dargestellten Steuereinheit so gesteuert, daß die Sonde 16 pro Umlauf jeweils nur innerhalb zweier vorgegebener Drehwinkelbereiche bzw. Sektoren aktiviert wird, die in Fig. 1 schematisch mit den Pfeilen 18 und 30 angedeutet sind, wobei der Drehwinkel der Sonde 16 mittels eines in Fig. 1 nicht gezeigten Sensors erfaßt wird. Die beiden Drehwinkelbereiche 18 und 30 sind um 180° versetzt und sind so gewählt, daß sich innerhalb dieser Drehwinkelbereiche 18, 30 die Sonde 16 in dem Bereich der Prüflingsfläche 28 befindet, in welchem kein Einfluß der kurz zuvor überstrichenen Kante 24 bzw.26 mehr auftritt und in welchem sich die danach zu überstreichende Kante 26 bzw. 24 noch nicht auf das Wirbelstromsignal auswirkt. Auf diese Weise wird die Sonde 16 pro Umlauf zweimal innerhalb einander gegenüberliegender Kreisbögen bzw. Sektoren 18, 30 aktiviert (die Sonde 16 befindet sich dabei aktuell im Bereich der durchgezogenen Linien, während mit gestrichelten Linien die um 180° versetzte Drehposition der Sonde 16 angedeutet ist). Die eigentliche Wirbelstrommessung erfolgt somit im wesentlichen im Bereich zweier komplementärer Kreisbögen 18 bzw. 30. Die resultierenden, mittels der Sonde 16 anhand von Wirbelstromsignalen abgetasteten Bereiche der Fläche 28 sind in Fig. 1 als mit den Bezugszeichen 18' bzw. 30' bezeichnete Kreisbögen dargestellt.

Auf diese Weise werden einerseits von Kanten herrührende Störsignale zuverlässig eliminiert, während andererseits doppelt so viele Meßdaten erfaßt werden bzw. die doppelte Prüflingsfläche 28 überprüft wird, als wenn nur eine Messung pro Umlauf vorgenommen würde.

Sobald auf einem der beiden pro Umlauf gemessenen Kreisbögen 18 bzw. 30 Prüflingsfehlersignale detektiert werden, bestimmt ein nachgeschalteter Rechner die zugehörige geometrische Fehlerposition auf dem Prüfling 20, welche beispielsweise durch eine automatische Farbmarkierung kenntlich gemacht werden kann.

In Fig. 2 ist eine abgewandelte Ausführungsform dargestellt, bei welcher zwei Wirbelstromsensoren 16, 17 anstelle eines einzigen Wirbelstromsensors 16 vorgesehen sind, welche in Umfangsrichtung der Scheibe 14 um 180° zueinander versetzt sind. Auch bei dieser Ausführungsform erfaßt jede Sonde 16, 17 während eines Umlaufs in zwei um 180° zueinander versetzten Drehwinkelbereichen bzw. Sektoren Meßsignale, wobei aufgrund der Symmetrie der Anordnung beide Sonden 16, 17 jeweils gleichzeitig aktiviert sind.

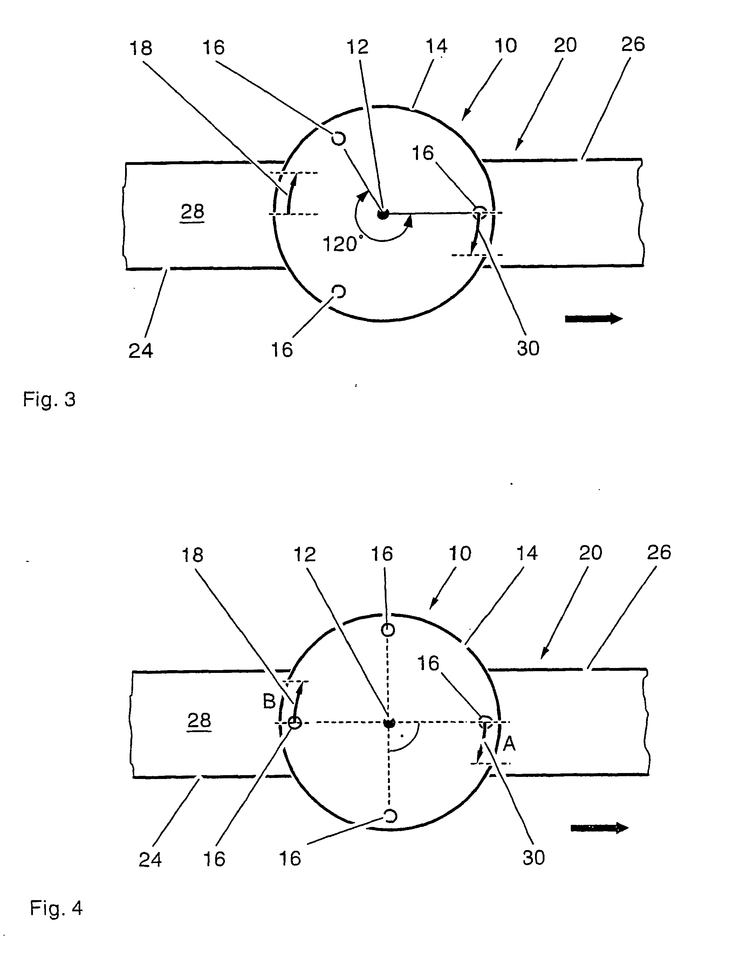

In Fig. 3 ist eine abgewandelte Ausführungsform gezeigt, bei welcher drei Sensoren 16 in radialer Richtung gleichmäßig verteilt im Umfangsrandbereich der Trägerscheibe 14 angeordnet sind. Die Sensoren 16 sind dabei so gesteuert, daß sie während ihres Umlaufs jeweils nur beim Durchlaufen der mit Pfeilen bzw. gestrichelten Linien angedeuteten Sektoren 18 und 30 aktiviert sind und auszuwertende Meßwerte liefern, während sie für den Rest des Umlaufs deaktiviert sind, um Fehlersignale auszuschließen.

In Fig.4 ist eine weitere abgewandelte Ausführungsform dargestellt, wobei anstelle von drei Sensoren vier in Umfangsrichtung gleichmäßig verteilte, d.h. jeweils um 90° zueinander versetzte, Sensoren 16 vorgesehen sind. Auch diese liefern nur während des Überstreichens der Sektoren 18 bzw.30 auszuwertende Meßwerte.

Es versteht sich, daß, je mehr Sensoren vorgesehen sind, eine desto größere Abtastdichte bei konstanter Vorschubgeschwindigkeit bzw. eine größere Vorschubgeschwindigkeit bei gleicher Abtastdichte ermöglicht wird.

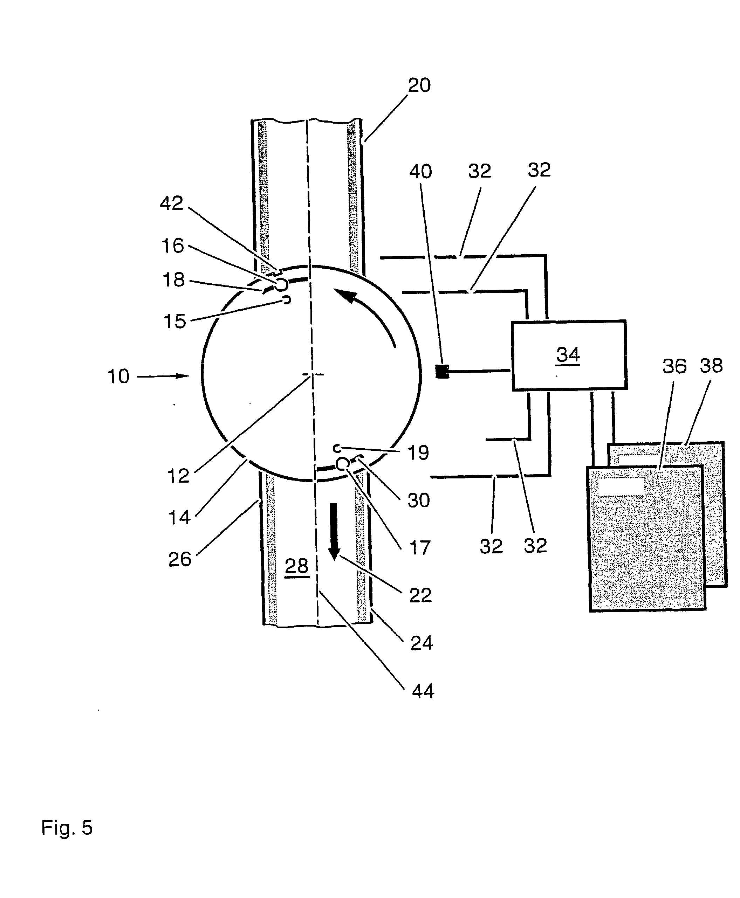

In Fig. 5 ist die Ausführungsform gemäß Fig. 2 mit zwei Sonden bzw. Sensoren 16 und 17 etwas detaillierter dargestellt, wobei für gleiche Elemente in Fig. 2 und Fig. 5 die gleichen Bezugszeichen verwendet werden.

Benachbart zu den Wirbelstromsonden 16 und 17 ist jeweils eine Abstandssonde 15 bzw. 19 angeordnet. Die Signale der Sonden 15, 16, 17 und 19 werden über schematisch angedeutete Signalleitungen 32 einem Abstandskompensator 34 zugeleitet, von wo aus die Signale einer Signalauswerteeinheit mit zwei Kanälen 36 bzw. 38 zugeführt werden. Ferner ist ein Drehgeber bzw. Positionssensor 40 vorgesehen, der auf eine benachbart zu dem Wirbelstromsensor 17 angeordnete Marke 42 anspricht und dessen Signal über eine Leitung 32 ebenfalls der Auswerteeinheit zugeführt wird.

Die Sektoren 18 bzw. 30, während welcher die beiden Wirbelstromsonden 16 und 17 jeweils aktiviert sind, sind so ausgewählt, daß sie sich jeweils von der Mittellinie 44 des Prüflings bis knapp vor die Kante 26 bzw. 24 erstrecken, wodurch die vom Überstreichen der jeweils anderen Kante 24 bzw. 26 herrührenden Signalstörungen in dem Bereich der Sektoren 18 und 30 nicht mehr auftreten sollten.

Die Aktivierung der Wirbelstromsonden 16 und 17 wird anhand der von dem Drehgeber 40 empfangenen Positionssignale gesteuert. Gemäß der Darstellung von Fig. 5 wird dabei beispielsweise die Wirbelstromsonde 16 dann jeweils aktiviert, wenn die Drehgebermarke 42 die 90°- bzw. 270°-Position erreicht, wobei dies aufgrund der symmetrischen, um 180° verdrehten Anordnung der Sonde 17 auch für die Sonde 17 gilt.

Die Signale der Abstandssonden 15 und 19 werden ebenfalls in Abhängigkeit von der von dem Drehgeber 40 ermittelten Winkelposition ausgewertet, d.h. diese Signale werden sinnvollerweise nur in den Drehwinkelbereichen ausgewertet, in welchen sich die Abstandssonden 15 und 19 über der Prüflingsfläche 28 befinden.

Ferner wird das Drehgebersignal auch verwendet, um die laterale Position eines aufgefundenen Defekts des Prüflings 20 zu ermitteln, d.h. die Auswertung des Signals der Wirbelstromsonden 16 und 17 erfolgt drehwinkelabhängig, wobei das Wirbelstromsignal auch auf einer Anzeige drehwinkelabhängig dargestellt wird.

Das Signal des Drehgebers 40 dient ferner zur Überwachung bzw. Steuerung der Drehzahl der Trägerscheibe 14.

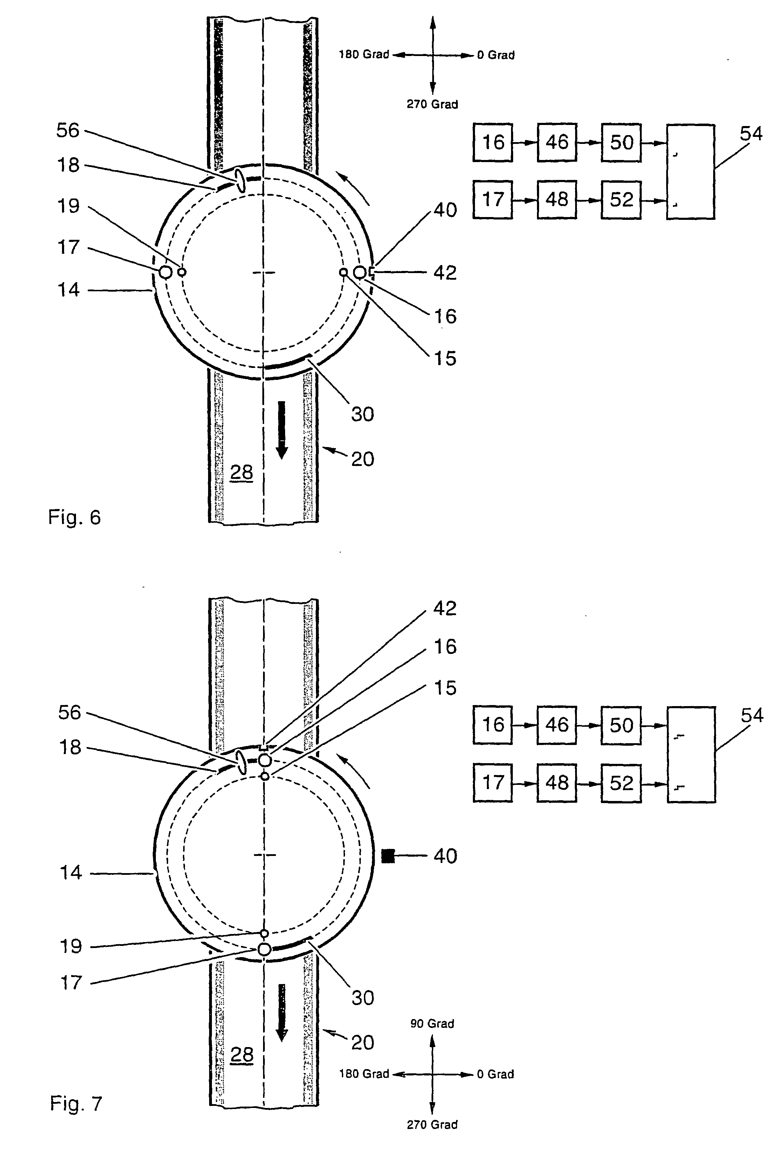

In den Figuren 6 bis 9 ist der Aufbau und die Betriebsweise der Signalauswertungskanäle 36 und 38 schematisch gezeigt. Demgemäß werden die Signalauswertungskanäle 36 und 38 von zwei parallelen Signalbearbeitungsstufen ("Frontends") 46 und 48, welche jeweils fest der Wirbelstromsonde 16 bzw. 17 zugeordnet sind, zwei parallel angeordneten Alarmprozessoren 50 und 52 sowie einer zweikanaligen Anzeigeeinrichtung 54 gebildet. Die Alarmprozessoren 50, 52 dienen dazu, Signale zu erkennen und zu lokalisieren, welche auf einen Fehler des Prüflings 20 hindeuten, wie er beispielhaft mit dem Bezugszeichen 56 angedeutet ist. Die Alarmprozessoren 50 bzw.52 sind dabei jeweils fest einem der beiden Kanäle der Anzeigeeinrichtung 54 zugeordnet. Die Zuordnung zwischen den Frontends 46 und 48 und den Alarmprozessoren 50 und 52 ist im Gegensatz dazu nicht fest, sondern wird im Verlauf einer Umdrehung der Trägerscheibe 14 drehwinkelabhängig umgeschaltet, wie dies nachfolgend näher erläutert ist.

In Fig. 6 ist eine Position gezeigt, bei welcher der Drehgeber 40 und die Drehgebermarke 42 kongruent liegen, wobei sich entsprechend auch die Wirbelstromsonde 16 an dem Drehgeber 40 befindet. Diese Stellung der Trägerscheibe 14 ist als die 0°-Stellung definiert, wobei sich in dieser Stellung die beiden Sonden 16 und 17 maximal weit außerhalb der Prüflingsfläche 28 befinden. In dieser Stellung sind beide Sonden 16, 17 deaktiviert und es wird entsprechend kein Signal an der Anzeigeeinheit 54 angezeigt. Der Ausgang des Frontends 46 der Sonde 16 ist dabei auf den Eingang des Alarmprozessors 50 geschaltet, während der Ausgang des Frontends 48 der Sonde 17 auf den Eingang des Alarmprozessors 52 geschaltet ist. Aufgrund des Durchgangs der Marke 42 wird der Drehgeber 40 geschaltet und gibt ein entsprechendes Signal ab.

In der Position gemäß Fig. 7 hat sich die Trägerscheibe 14 um 90° in Pfeilrichtung gedreht, so daß die Sonden 16 und 17 nun in der Prüflingsmitte zu liegen kommen. Da somit beide Sonden 16 und 17 einen der Meßsektoren bzw. Drehwinkelbereiche 18 bzw. 30 erreicht haben, werden beide Sonden 16 und 17 aktiviert und die Meßsignalaufzeichnung für beide Sektoren 18 und 30 beginnt.

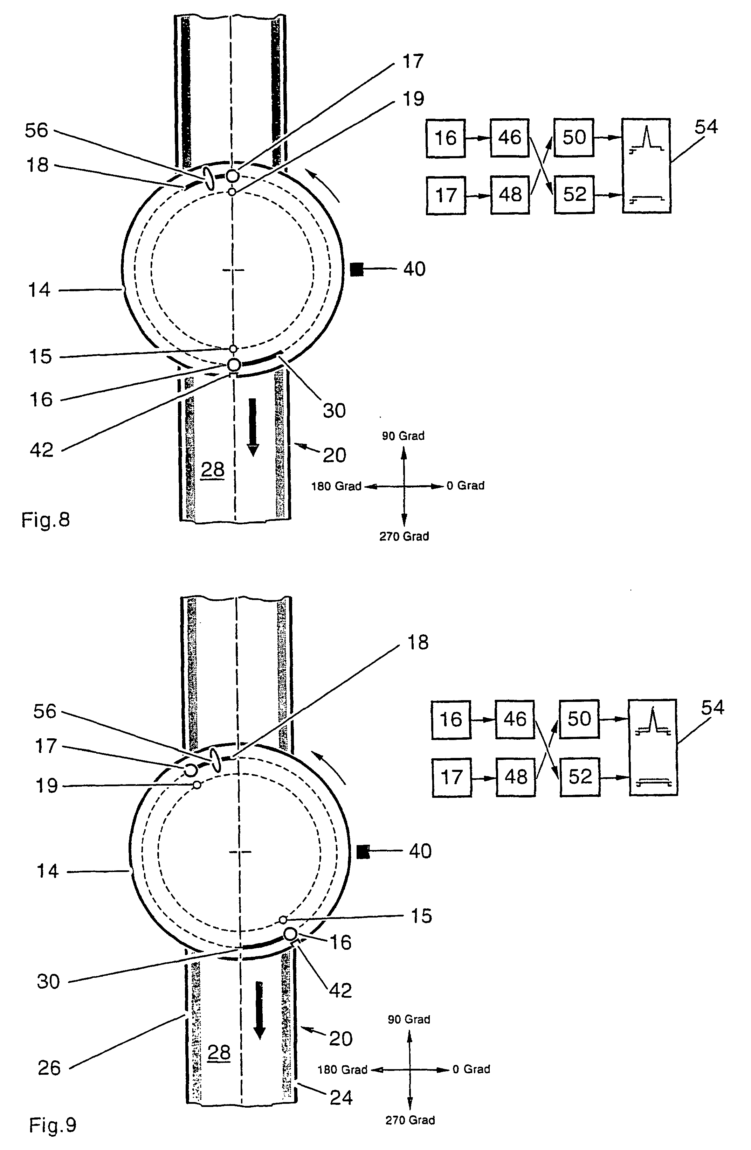

In Fig. 8 ist eine Position gezeigt, in welcher sich die Trägerscheibe 14 bezüglich der in Fig. 7 gezeigten Position genau um 180° weiter gedreht hat, d.h. die Sonde 17 hat nunmehr den Beginn des Meßsektors 18 erreicht, während die Sonde 16 den Anfang des Meßsektors 30 erreicht hat. Entsprechend werden die beiden Sonden 16 und 17 wieder aktiviert, um Meßsignale aufzuzeichnen. Im Gegensatz zu der Stellung von Fig. 7 wird nun jedoch das Signal der Sonde 16 dem Alarmprozessor 52 zugeführt, während das Signal der Sonde 17 dem Alarmprozessor 50 zugeführt wird, so daß nun das Signal der Sonde 16 auf dem unteren Kanal der Einrichtung 54 dargestellt wird, während das Signal der Sonde 17 nun auf dem oberen Kanal dargestellt wird.

Durch das Drehwinkel-abhängige Umschalten der Kanäle wird eine meßsektorenweise Zuordnung der Alarmprozessoren 50, 52 und damit der Kanäle der Anzeigeeinrichtung 54 erzielt, d.h. in dem oberen Kanal der Anzeigeeinrichtung 54 wird immer das aus dem Meßsektor 18 stammende Signal dargestellt, während in dem unteren Kanal das von dem Meßsektors 3 0 stammende Signal angezeigt wird.

In Fig. 9 ist eine Position der Trägerscheibe 14 gezeigt Entsprechend erreicht die Sonde 17 gerade die Kante 26 und verläßt damit den Meßsektor 18, während die Sonde 16 die Kante 24 erreicht und damit den Meßsektor 30 verläßt. Entsprechend werden die Sonden 16 und 17 deaktiviert. Ferner wird nach Durchlaufen der in Fig. 9 gezeigten Position die Zuordnung zwischen den Frontends 46 und 48 und den Alarmprozessoren 50 und 52 wieder in die Konfiguration gemäß Fig. 6 bis 8 umgeschaltet, d.h. die Sonde 16 wird auf den Alarmprozessor 50 und die Sonde 17 auf den Alarmprozessor 52 geschaltet, worauf der Zyklus von Neuem beginnen kann.

Die in den Figuren 6 bis 9 beschriebene zweikanalige Ausgestaltung der Signalverarbeitungseinheit (Tandemmodus) ist zweckmäßig, wenn die Anzahl der Wirbelstromsonden geradzahlig ist, da dann die beiden Meßsektoren 18 und 30 jeweils von zwei Wirbelstromsonden gleichzeitig durchlaufen werden (wenn die Spulen gleichmäßig über den Umfang der Trägerscheibe 14 verteilt sind, was zweckmäßig ist). Die Auswertungseinheit ist allgemein so ausgebildet, daß die für die Messung relevanten Parameter, wie (Winkel)-Breite der Meßsektoren, Mitten-Offset der Sektoren (Festlegung der Position der Meßsektoren relativ zu der Prüflingsquerrichtung), sowie Winkel-Offset der Sensoren (Verschiebung der Sensoren bezüglich des Drehgebernullpunkts) vom Bediener für jede Anwendung eingestellt werden können. Die Meßsektoren können auch so gewählt sein, daß sie über die Prüflingsmitte 44 hinausreichen und insofern eine gewisse Überlappung der Sonden erzielt wird.

## Patentansprüche

1. Vorrichtung zur Wirbelstromprüfung eines linear vorgeschobenen Prüflings (20) mit einer planaren Oberfläche (28), mit mindestens einem Sensor (16, 17) für in dem Prüfling induzierte Wirbelströme, einer von einem Antrieb zu einer Drehbewegung angetriebenen Trägeranordnung (14) für den mindestens einen Sensor, die so ausgebildet ist, dass jeder Sensor eine Kreisbahn beschreibt, die parallel zur Oberfläche des Prüflings liegt und deren Durchmesser größer als die Abmessung des Prüflings quer zur Vorschubrichtung ist, **gekennzeichnet durch** einen Drehgeber (40, 42) zur Erfassung des Drehwinkels des Sensors, sowie **durch** eine Signalauswertungseinheit (36, 38), die so ausgebildet ist, dass jedem Sensor zwei voneinander getrennte Drehwinkelbereiche (18, 30) zugeordnet werden, innerhalb welcher der betreffende Sensor den Prüfling überstreicht, und Signale des betreffenden Sensors jeweils nur innerhalb der beiden ihm zugeordneten Drehwinkelbereiche ausgewertet werden.

2. Vorrichtung gemäß Anspruch 1, **dadurch gekennzeichnet, dass** die beiden einem jeden Sensor zugeordneten Drehwinkelbereiche (18, 30) um 180 Grad getrennt sind.

3. Vorrichtung gemäß Anspruch 1 oder 2, **dadurch gekennzeichnet, dass** die Drehwinkelbereiche (18, 30) aller Sensoren (16, 17) identisch sind.

4. Vorrichtung gemäß einem der vorhergehenden Ansprüche, **dadurch gekennzeichnet, dass** die Drehwinkelbereiche (18, 30) so ausgewählt sind, dass in den Drehwinkelbereichen keine durch den Randbereich (24, 26) des Prüflings (20) verursachte Störsignale auftreten.

5. Vorrichtung gemäß einem der vorhergehenden Ansprüche, **dadurch gekennzeichnet, dass** die Sensoren (16, 17) in Umfangsrichtung gleichmäßig über die Kreisbahn verteilt sind.

6. Vorrichtung gemäß einem der vorhergehenden Ansprüche, **dadurch gekennzeichnet, dass** eine gerade Anzahl von Sensoren (16, 17) vorgesehen ist und die Signalauswertungseinheit (50, 52, 54) zweikanalig ausgebildet ist, wobei jedem der beiden Drehwinkelbereiche einer der beiden Kanäle (50, 52) zugeordnet ist.

7. Vorrichtung gemäß einem der Ansprüche 1 bis 5, **dadurch gekennzeichnet, dass** eine ungerade Anzahl von Sensoren (16) vorgesehen ist und die Signalauswertungseinheit einkanalig ausgebildet ist.

8. Vorrichtung gemäß Anspruch 6, **dadurch gekennzeichnet, dass** jeder Kanal eine Fehlersignalerkennungseinheit (50, 52) aufweist.

9. Vorrichtung gemäß Anspruch 8, **dadurch gekennzeichnet, dass** zwei Wirbelstromsensoren vorgesehen sind, wobei jedem Sensor eine eigene Signalbearbeitungseinheit zugeordnet ist, deren Ausgang je nach Drehwinkel der Sensoren so einer anderen der beiden Fehlersignalerkennungseinheiten (50, 52) zugeordnet ist, dass jedem der beiden Drehwinkelbereiche (18, 30) jeweils die gleiche der beiden Fehlersignalerkennungseinheiten (50, 52) zugeordnet ist.

10. Vorrichtung gemäß einem der vorhergehenden Ansprüche, **dadurch gekennzeichnet, dass** jeder Sensor (16, 17) als Differenzspulenspaar ausgebildet ist.

11. Vorrichtung gemäß einem der vorhergehenden Ansprüche, **dadurch gekennzeichnet, dass** mindestens eine Abstandssonde (15, 19) zur Erfassung des Abstands zwischen der Sensor-Kreisbahn und der Prüflingsoberfläche (28) an der Trägeranordnung (14) vorgesehen ist.

12. Vorrichtung gemäß Anspruch 11, **dadurch gekennzeichnet, dass** für jeden Sensor (16, 17) in dessen Nähe eine Abstandssonde (15, 19) vorgesehen ist.

13. Vorrichtung gemäß 11 oder 12, **dadurch gekennzeichnet, dass** eine Abstandsregelung (34) für die Trägeranordnung (14) vorgesehen ist, um anhand des Signals der Abstandssonde(n) (15, 19) den Abstand zwischen der Sensor-Kreisbahn und der Prüflingsoberfläche (28) konstant zu halten.

14. Verfahren zur Wirbelstromprüfung eines linear vorgeschobenen Prüflings (20) mit einer planaren Oberfläche (28), wobei mindestens ein Sensor (16, 17) für in dem Prüfling induzierte Wirbelströme mittels einer von einem Antrieb zu einer Drehbewegung angetriebenen Trägeranordnung (14) auf einer Kreisbahn bewegt wird, die parallel zur Oberfläche des Prüflings liegt und deren Durchmesser größer als die Abmessung des Prüflings quer zur Vorschubrichtung ist, **dadurch gekennzeichnet, dass** der Drehwinkels des Sensors erfasst wird, jedem Sensor zwei voneinander getrennte Drehwinkelbereiche zugeordnet werden, innerhalb welcher der betreffende Sensor den Prüfling überstreicht, und Signale des betreffenden Sensors jeweils nur innerhalb der beiden ihm zugeordneten Drehwinkelbereiche ausgewertet werden.

## Claims

1. Apparatus for eddy current testing of a unit under test (20) which is fed forwards linearly and has a planar surface (28), having at least one sensor (16, 17) for eddy currents which are induced in the unit under test, having a mount arrangement (14) which is driven by a drive in order to carry out a rotary movement, for the at least one sensor, which mount arrangement (14) is arranged such that each sensor describes a circular path which is parallel to the surface of the unit under test and whose diameter is larger than the size of the unit under test, transversely with respect to the forward movement direction, **characterized by** a rotation sensor (40, 42) for detection of the rotation angle of the sensor, and by a signal evaluation unit (36, 38), which is designed such that each sensor is associated with two mutually separate rotation angle ranges (18, 30) within which the relevant sensor passes over the unit under test, and signals from the relevant sensor are in each case evaluated only within the two rotation angle ranges which are associated with it.

2. Apparatus according to Claim 1, **characterized in that** the two rotation angle ranges (18, 30) associated with each sensor are separated by 180 degrees.

3. Apparatus according to Claim 1 or 2, **characterized in that** the rotation angle ranges (18, 30) of all of the sensors (16, 17) are identical.

4. Apparatus according to one of the preceding claims, **characterized in that** the rotation angle ranges (18, 30) are chosen such that no interference signals caused by the edge area (24, 26) of the unit under test (20) occur in the rotation angle ranges.

5. Apparatus according to one of the preceding claims, **characterized in that** the sensors (16, 17) are distributed uniformly over the circular path in the circumferential direction.

6. Apparatus according to one of the preceding claims, **characterized in that** an even number of sensors (16, 17) are provided, and the sensor evaluation unit (50, 52, 54) has two channels, with each of the two rotation angle ranges being associated with one of the two channels (50, 52).

7. Apparatus according to one of Claims 1 to 5, **characterized in that** an odd number of sensors (16) are provided and the signal evaluation unit has one channel.

8. Apparatus according to Claim 6, **characterized in that** each channel has an error or fault signal identification unit (50, 52).

9. Apparatus according to Claim 8, **characterized in that** two eddy current sensors are provided, with each sensor being associated with its own signal processing unit, whose output is associated with one of the other two error or fault signal identification units (50, 52), depending on the rotation angle of the sensors, in such a way that each of the two rotation angle ranges (18, 30) is respectively associated with the same one of the two error or fault signal identification units (50, 52).

10. Apparatus according to one of the preceding claims, **characterized in that** each sensor (16, 17) is formed by a differential coil pair.

11. Apparatus according to one of the preceding claims, **characterized in that** at least one distance probe (15, 19) is provided in order to detect the distance between the sensor circular path and the unit under test surface (28) on the mount arrangement (14).

12. Apparatus according to Claim 11, **characterized in that** a distance probe (15, 19) is provided in the vicinity for each sensor (16, 17).

13. Apparatus according to 11 or 12, **characterized in that** a distance regulator (34) is provided for the mount arrangement (14) in order to keep the distance between the sensor circular path and the unit under test surface (28) constant on the basis of the signal from the distance probe or probes (15, 19).

14. Method for eddy current testing of a unit under test (20) which is fed forwards linearly and has a planar surface (28), with at least one sensor (16, 17) for eddy currents which are induced in the unit under test being moved on a circular path by means of a mount arrangement (14) which is driven by a drive in order to carry out a rotary movement, which circular path is parallel to the surface of the unit under test and whose diameter is larger than the size of the unit under test transversely with respect to the forward movement direction, **characterized in that** the rotation angle of the sensor is detected, each sensor is associated with two mutually separate rotation angle ranges within which the relevant sensor passes over the unit under test, and signals from the relevant sensor are in each case evaluated only within the two rotation angle ranges which are associated with it.

## Revendications

1. Dispositif de contrôle par courant de Foucault d'un échantillon (20) avancé de manière linéaire comprenant une surface plane (28), avec au moins un capteur (16, 17) pour des courants de Foucault induits dans l'échantillon, un arrangement porteur (14) entraîné par un mécanisme d'entraînement en un mouvement rotatif pour l'au moins un capteur, lequel est configuré de telle sorte que chaque capteur décrive une trajectoire circulaire qui est parallèle à la surface de l'échantillon et dont le diamètre est supérieur à la dimension de l'échantillon dans le sens transversal par rapport au sens de l'avance, **caractérisé par** un codeur rotatif (40, 42) destiné à détecter l'angle de rotation du capteur et par une unité d'analyse du signal (36, 38) qui est configurée de telle sorte que deux plages d'angles de rotation (18, 30) séparées l'une de l'autre soient associées à chaque capteur, à l'intérieur desquelles le capteur concerné balaye l'échantillon et des signaux du capteur concerné sont à chaque fois analysés uniquement à l'intérieur des deux plages d'angles de rotation qui lui sont associées.

2. Dispositif selon la revendication 1, **caractérisé en ce que** les deux plages d'angles de rotation (18, 30) associées à chacun des capteurs sont séparées de 180 degrés.

3. Dispositif selon la revendication 1 ou 2, **caractérisé en ce que** les plages d'angles de rotation (18, 30) de tous les capteurs (16, 17) sont identiques.

4. Dispositif selon l'une des revendications précédentes, **caractérisé en ce que** les plages d'angles de rotation (18, 30) sont choisies de telle sorte qu'aucun signal parasite provoqué par la zone de bordure (24, 26) de l'échantillon (20) ne se produise dans les plages d'angles de rotation.

5. Dispositif selon l'une des revendications précédentes, **caractérisé en ce que** les capteurs (16, 17) sont répartis régulièrement sur la circonférence de la trajectoire circulaire.

6. Dispositif selon l'une des revendications précédentes, **caractérisé en ce qu'**il est prévu un nombre pair de capteurs (16, 17) et l'unité d'analyse du signal (50, 52, 54) est configurée avec deux canaux, l'un des deux canaux (50, 52) étant associé à chacune des deux plages d'angles de rotation.

7. Dispositif selon l'une des revendications 1 à 5, **caractérisé en ce qu'**il est prévu un nombre impair de capteurs (16) et l'unité d'analyse du signal est configurée avec un seul canal.

8. Dispositif selon la revendication 6, **caractérisé en ce que** chaque canal présente une unité de détection de signal de défaut (50, 52).

9. Dispositif selon la revendication 8, **caractérisé en ce que** deux détecteurs de courant de Foucault sont prévus, une unité de traitement de signal propre étant associée à chaque capteur, la sortie de laquelle étant associée, suivant l'angle de rotation des capteurs, à une autre des deux unités de détection de signal de défaut (50, 52) de telle sorte que la même des deux unités de détection de signal de défaut (50, 52) soit à chaque fois associée à chacune des deux plages d'angles de rotation (18, 30).

10. Dispositif selon l'une des revendications précédentes, **caractérisé en ce que** chaque capteur (16, 17) est réalisé sous la forme d'une paire de bobines différentielles.

11. Dispositif selon l'une des revendications précédentes, **caractérisé en ce qu'**il est prévu au moins une sonde d'écart (15, 19) sur l'arrangement porteur (14) destinée à détecter l'écart entre la trajectoire circulaire du capteur et la surface de l'échantillon (28).

12. Dispositif selon la revendication 11, **caractérisé en ce qu'**une sonde d'écart (15, 19) est prévue pour chaque capteur (16, 17) à proximité de celui-ci.

13. Dispositif selon la revendication 11 ou 12, **caractérisé en ce qu'**il est prévu un régulateur d'écart (34) pour l'arrangement porteur (14) afin de maintenir constant au moyen du signal de la ou des sondes d'écart (15, 19) l'écart entre la trajectoire circulaire du capteur et la surface de l'échantillon (28).

14. Procédé de contrôle par courant de Foucault d'un échantillon (20) avancé de manière linéaire comprenant une surface plane (28), au moins un capteur (16, 17) pour des courants de Foucault induits dans l'échantillon étant déplacé au moyen d'un arrangement porteur (14) entraîné en un mouvement circulaire par un mécanisme d'entraînement sur une trajectoire circulaire qui est parallèle à la surface de l'échantillon et dont le diamètre est supérieur à la dimension de l'échantillon dans le sens transversal par rapport au sens de l'avance, **caractérisé en ce que** l'angle de rotation du capteur est détecté, que deux plages d'angles de rotation séparées l'une de l'autre sont associées à chaque capteur, à l'intérieur desquelles le capteur concerné balaye l'échantillon et les signaux du capteur concerné sont à chaque fois analysés uniquement à l'intérieur des deux plages d'angles de rotation qui lui sont associées.
